# EUROPEAN PATENT SPECIFICATION

(11) **EP 2 622 001 B1**
(45) Date of publication and mention of the grant of the patent: **20.04.2016**
(21) Application number: 11757315.4
(22) Date of filing: 15.09.2011
(51) Int. Cl.: C08G 63/672, C08L 67/02, C08L 75/06

(54) **HIGH FUNCTIONALITY AROMATIC POLYESTERS, POLYOL BLENDS COMPRISING THE SAME AND RESULTANT PRODUCTS THEREFROM**
HOCHFUNKTIONELLE AROMATISCHE POLYESTER, POLYOLMISCHUNGEN DAMIT UND DARAUS RESULTIERENDE PRODUKTE
POLYESTERS AROMATIQUES À HAUTE FONCTIONNALITÉ, MÉLANGES DE POLYOLS LES COMPRENANT ET PRODUITS RÉSULTANT DE CEUX-CI

(30) Priority: 29.09.2010 IT MI20101782
(43) Date of publication of application: 07.08.2013
(73) Proprietor: Dow Global Technologies LLC, Midland, MI 48674 (US)
(72) Inventor: JIMENEZ, Jorge, Lake Jackson Texas 77566 (US); BAE, Woo-Sung, Rosharon Texas 77583 (US); LISTA, Giuseppe Y., I-41121 Modena (IT); GELFER, Mikhail Y., Sugarland Texas 77479 (US); PARENTI, Vanni, I-42012 Campagnola Emilia (IT); KRAMER, Hans, CH-8645 Kempraten-jona (CH)
(74) Representative: Beck Greener
(86) International application number: PCT/EP2011/065981
(87) International publication number: WO 2012/041709

(56) References cited:
- WO-A1-99/42508
- WO-A1-2010/015642
- US-A- 4 642 319

## Description

The present invention relates generally to certain polyesters polyols suitable for blending with other polyols or other materials mutually compatible with the polyester polyols to achieve polyurethane and polyisocyanurate products.

The use of a polyol in the preparation of polyurethanes by reaction of the polyol with a polyisocyanate in the presence of a catalyst and optionally other ingredients is well known. Aromatic polyester polyols are a type of polyol widely used in the manufacture of polyurethane and polyurethane-polyisocyanurate foams and resins.

Aromatic polyester polyols are attractive in making polyurethane products as they tend to be low in cost and are adaptable for many end use applications where the products have good properties. One class of aromatic polyester polyols widely used is a polyol produced by esterification of phthalic acid or phthalic acid anhydride with an aliphatic polyhydric alcohol, for example, diethylene glycol. This type of polyester polyol is capable of reacting with organic isocyanates to produce, for example, coatings, adhesives, sealants, and elastomers ("CASE materials"), that can have excellent characteristics, such as tensile strength, adhesion, and abrasion resistance. Such aromatic polyester polyols may also be used in formulations for production of rigid polyurethane or polyisocyanurate foam.

One problem generally encountered when using aromatic polyester polyols, is they generally have low functionality, that is, a functionality close to 2. This low functionality generally has a negative impact on green compressive and compressive strength. Use of high functionality glycols such as glycerin or pentaerythritol may be used to increase the functionality of the polyester polyol. However this increased functionality typically comes at the expense of a significant increase in viscosity.

With an increased emphasis on the use of non-ozone depleting blowing agents, such as hydrocarbons, a further drawback of aromatic based polyester polyols in formulations is they generally lead to low hydrocarbon compatibility. Efforts to increase the hydrocarbon compatibility include modifications of the polyester such as the incorporation of fatty acids. While incorporation of a fatty acids into the polyester leads to significant improvements in compatibility, such modifications typically come at the expense of polyester functionality or at the expense of flame retardation.

Thus, there is a need for polyester polyols having good hydrocarbon compatibility which are economical to produce and can be converted into cellular foams and other CASE materials having excellent properties. It is further desirable to have an aromatic polyester polyol having low viscosity, good hydrocarbon compatibility and based on aromatic content may be used in the production of polyurethane products to meet flame retardation standards.

The present invention discloses a new class of aromatic polyester polyols having an average functionality of about 2.4 to 3 comprising the inter-esterification reaction product of terephthalic acid and at least one polyether polyol having a nominal functionality of 3 to 4. In one aspect, the invention relates to a method of making a polyester polyol comprising reacting in a one shot synthesis at least:
A) an aromatic component comprising 80 mole percent or greater of terephthalic acid;
B) at least one polyether polyol having a nominal functionality greater than 2 and less than or equal to 4, a molecular weight of 250 to 1000 and has a polyoxypropylene content of at least 70 % by weight of the polyol; and
C) at least one glycol other than B having a molecular weight from 60 to 250;
wherein A, B, and C are present in the reaction on a percent weight bases of 20 to 60 weight percent A); 15 to 70 weight percent of B); and 10 to 50 weight percent of C), wherein the functionality of the polyol is from 2.4 to 3.0.

In a further embodiment, the invention is a cellular polyurethane and polyurethane/polyisocyanurate foam made using such aromatic polyester polyols.

The aromatic polyester polyols formed by the method of the present invention can be readily blended with prior art polyols, if desired, and also with various additives conventionally used in the formulation of resin pre-polymer blends.

The polyols blends are particularly useful in polyol formulations for making appliance rigid foams. These blends comprise from 10 to 40 weight percent of an aromatic polyester polyol as described above and the remainder is at least one second polyol wherein the second polyol is a polyether polyol, a polyester polyol or a combination thereof having a functionality of 2 to 8 and a molecular weight of 100 to 2,000.

Another aspect of the invention provides a polyol blend for producing insulation foam for construction applications, particularly construction panels. These blends will generally comprise from 10 to 90 weight percent of an aromatic polyester polyol as described above and the remainder is at least one second polyol wherein the second polyol is a polyether polyol, a polyester polyol or a combination thereof having a functionality of 2 to 8 and a molecular weight of 100 to 10,000.

In another aspect the invention provides A process for preparing a rigid polyurethane foam, comprising
a) forming a reactive mixture which contains at least
   1) a polyester formed by the method of claim 1 or a mixture thereof with at least one other polyol,
      provided that such mixture contains at least 10 percent by weight of the polyester
   2) an polyisocyanate,
   3) at least one hydrocarbon, hydrofluorocarbon, hydrochlorofluorocarbon, fluorocarbon, dialkyl ether or fluorine-substituted dialkyl ether physical blowing agent;
b) subjecting the reactive mixture to conditions such that the reactive mixture expands and cures to form a rigid polyurethane foam.

The aromatic polyester polyols formed by the method the present invention are prepared from a reaction
mixture comprising at least A) terephthalic acid; B) at least one polyether polyol wherein the polyether polyols has a functionality of greater than 2 and less than or equal to 4 and has a polyoxypropylene content of at least 70 % by weight of the polyol; and C) at least one glycol component other than B) having a molecular weight from 60 to 250. It was found the polyesters formed by the method the present invention can be used to produce polyurethane foams having good green strength. It was also found such polyester has good compatibility with other polyether polyols and with hydrocarbon blowing agents. The term "green strength" denotes the basic integrity and strength of the foam at demold, also referred to as demold expansion.

The aromatic component (component A) of the present polyester polyols is derived primarily from terephthalic acid. The terephthalic acid component will generally comprise 80 mole percent or more of the aromatic content. In further embodiments, terephthalic acid will comprise 85 mole percent or more of the aromatic component. In another embodiment, terephthalic acid will comprise 90 mole percent or more of the aromatic component for making the aromatic polyester polyol. In another embodiment the aromatic content comprises greater than 95 mole percent terephthalic acid. In another embodiment the aromatic content is essentially derived from terephthalic acid. While the polyester polyols can be prepared from substantially pure terephthalic acid, more complex ingredients can be used, such as the side-stream, waste or scrap residues from the manufacture of terephthalic acid. Recycled materials which can be broken down into terephthalic acid and diethylene glycol, such as the digestion products of polyethylene terephthalate may be used.

Component A) will generally comprise from 20 to 60 wt % of the reaction mixture. In a further embodiment, component A) comprise 25 wt% or greater of the reaction mixture. In a further embodiment, component A) comprises 55 wt% or less of the reaction mixture. The polyether polyol include those obtained by the alkoxylation of suitable starting molecules (initiators) with a C₂ to C₄ alkylene oxide, such as ethylene oxide, propylene oxide, 1,2- or 2,3-butylene oxide, tetramethylene oxide or a combination of two or more thereof. The polyether polyol will generally contain greater than 70% by weight of oxyalkylene units derived from propylene oxide (PO) units and preferably at least 75% by weight of oxyalkylene units derived from PO. In other embodiments the polyol will contain greater than 80 wt% of oxyalkylene units derived from PO and in a further embodiment, 85 wt% or more of the oxyalkylene units will be derived from PO. In some embodiments, propylene oxide will be the sole alkylene oxide used in the production of the polyol. When an alkylene oxide other than PO is used, it is preferred the additional alkylene oxide, such as ethylene or butylene oxide is fed as a co-feed with the PO or fed as an internal block. Catalysis for this polymerization of alkylene oxides can be either anionic or cationic, with catalysts such as potassium hydroxide, cesium hydroxide, boron trifluoride, or a double cyanide complex (DMC) catalyst such as zinc hexacyanocobaltate or quaternary phosphazenium compound. In the case of alkaline catalysts, these alkaline catalysts are preferably removed from the polyol at the end of production by a proper finishing step, such as coalescence, magnesium silicate separation or acid neutralization. The polypropylene oxide based polyol, generally has a molecular weight of from 250 to 1,000. In one embodiment, the molecular weight is 260 or greater. In a further embodiment the molecular weight is less than 800, or even less than 600. In a further embodiment the molecular weight is less than 500.

The initiators for production of component B have a functionality of greater than 2 to less than or equal to 4; that is contain greater than 2 and up to 4 active hydrogens. As used herein, unless otherwise stated, the functionality refers to the nominal functionality. Non-limiting examples of such initiators include, for example, glycerol, trimethylol propane, ethylene diamine and aminoalcohols, such as, ethanolamine. In a further embodiment the initiator for the polyether contains 3 active hydrogen atoms.

The polypropylene oxide based polyol generally comprises from 10 to 70 weight percent of the reaction mixture. In further embodiment the polypropylene oxide based polyol will comprise from 10 to 60 wt percent of the reaction mixture. In another embodiment, the polypropylene oxide based polyol will comprises less than 50 wt percent of the reaction mixture.

In addition to the aromatic component A) and the polypropylene oxide based polyol component B), the reaction mixture for producing the polyester polyol contains one or more glycols having a molecular weight of 60 to 250 (component C)) which is different from component B). Such glycol, or blend of glycols, will generally have a nominal functionality of 2 to 3. While component C) may have a glycol with a functionality of greater than 3, to avoid an increase in the viscosity of the material, it is generally preferred the functionally of such a blend of glycols comprising component C) will be 3 or less.

In one embodiment, 2 functional glycols of component C) may be represented by the formula: 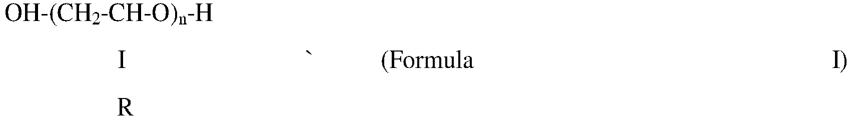 where R is hydrogen or a lower alkyl of 1 to 4 carbon atoms and n is selected to give a molecular weight of 250 or less. In further embodiments n is selected to give a molecular weight of less than 200. In a further embodiment, R is hydrogen. Non-limiting examples of diglycols which can be used in the present invention include ethylene glycol, diethylene glycol, and other polyethylene glycols, propylene glycol, dipropylene glycol, etc. Three functional glycols include, for example glycerin and trimethyolpropane. In one embodiment, the glycol component C) will contain a combination of 2 or more glycols. Examples of such combinations include glycerol and diethylene glycol; diethylene glycol and a polyethylene glycol wherein the polyethylene glycol has a molecular weight of greater than 150.

Component C) will generally comprise greater than 10 weight percent of the reaction mixtures and generally less than 50 weight of the reaction mixture for making the polyester. In another embodiment, the glycol component will comprise greater than 15 wt percent of the reaction mixture. In a further embodiment, the glycol component will be less than 45 wt percent of the reaction mixture.

The inclusion of components A), B) and C) in a one-shot synthesis, is believed to allow a random reaction of the aromatic component with the polyether polyol and glycol. Based on the components in making the polyester, the polyester will have a nominal functionality between 2.4 and 3.0 and generally from 2.5 to 2.9. The amount of materials used in making the polyester will generally provide for a polyester having a hydroxyl number of from 200 to 400. In further embodiments the hydroxyl number of the polyester is less than 350.

By inclusion of a specified amount of polypropylene oxide based polyol along with other glycols as specified above, along with the aromatic component, the viscosity of the resulting polyester is generally less than 60,000 mPa*s at 25 °C as measured by UNI EN ISO 3219. In a further embodiment the viscosity of the polyester polyol is less than 50,000 mPa*s. While it is desirable to have a polyol with as low a viscosity as possible, due to practical chemical limitations and end-use applications, the viscosity of the polyol will generally be greater than 2,000 mPa*s.

An aromatic polyester polyol formed by the method of the invention may include any minor amounts of unreacted
glycol remaining after the preparation of the polyester polyol. Although not desired, the aromatic polyester polyol can include up to about 30 weight percent free glycol/polyols.

The free glycol content of the aromatic polyester polyols formed by the method of the invention generally is from about 0 to about 30 weight percent, and usually from 1 to about 25 weight percent, based on the total weight of polyester polyol component. The polyester polyol may also include small amounts of residual, non-inter-esterified aromatic component. Typically the non-inter-esterified aromatic materials will be present in an amount less than 2 percent by weight based on the total weight of the components combined to form the aromatic polyester polyols formed by the method of the invention.

The polyester polyols may be formed by the polycondensation/transesterification and polymerization of components A, B, and C under conditions well known in the art. See for Example G. Oertel, Polyurethane Handbook, Carl Hanser Verlag, Munich, Germany 1985, pp 54-62 and Mihail Ionescu, Chemistry and Technology of Polyols for Polyurethanes, Rapra Technology, 2005, pp 263-294. In general, the synthesis is done at temperature of 180 to 280 °C. In another embodiment the synthesis is done at a temperature of at least 200 °C. In a further embodiment the synthesis is done at a temperature of 215 °C or greater. In a further embodiment the synthesis is done at a temperature of 260 °C or less.

While the synthesis may take place under reduced or increased pressure, the reaction is generally carried out near atmospheric pressure conditions.

While the synthesis may take place in the absence of a catalyst, catalysts which promote the esterification/ transesterification/polymerization reaction may be used. Examples of such catalysts include tetrabutyltitanate, dibutyl tin oxide, potassium methoxide, or oxides of zinc, lead or antimony; titanium compounds such as titanium (IV) isopropoxide and titanium acetylacetonate. When used, such catalyst is used in an amount of 0.005 to 1 weight percent of the total mixture. In further embodiments the catalyst is present in an amount of from 0.005 to 0.5 weight percent of the total mixture.

The volatile product(s) of the reaction, for example water and/or methanol, is generally taken off overhead in the process and forces the ester interchange reaction to completion.

The synthesis usually takes from one to five hours. The actual length of time required varies, of course; with catalyst concentration, temperature etc. In general, it is desired not to have too long a polymerization cycle, both for economic reasons and for the reason that if the polymerization cycle is too long, thermal degradation may occur.

The polyesters formed by the method of the present invention can be used as part of a polyol formulation for making various polyurethane or polyisocyanurate products. The polyol, also referred to as the isocyanate-reactive component, along with an isocyanate component make-up us a system for producing a polyurethane or polyisocyanurate. The polyesters may be used as part of a formulation for making a polyurethane and are particularly applicable in formulations for producing rigid foam.

The polyesters formed by the method of the present invention may be used alone or can be blended with other known polyols to produce polyol blends. Depending on the application, the polyester will generally range from 10 to 90 wt% of the total polyol formulation. The amount polyester polyols which can be used for particular applications can be readily determined by those skilled in the art. For examples, for formulations in rigid foam construction applications, the polyester can generally comprise from 10 up to 80 weight percent of the polyol formulation. In other such embodiments, the polyester will comprise less than 70 weight percent of the polyol formulation. In appliance insulation formulations for rigid foam applications, the polyester will generally be 40 weight percent or less of the polyol blend.

Representative polyols include polyether polyols, polyester polyols different from the polyester of the present invention, polyhydroxy-terminated acetal resins, and hydroxyl-terminated amines. Alternative polyols that may be used include polyalkylene carbonate-based polyols and polyphosphate-based polyols. Preferred are polyether or polyester polyols. Polyether polyols prepared by adding an alkylene oxide, such as ethylene oxide, propylene oxide, butylene oxide or a combination thereof, to an initiator having from 2 to 8 active hydrogen atoms. The functionality of polyol(s) used in a formulation will depend on the end use application as known to those skilled in the art. Such polyols advantageously have a functionality of at least 2, preferably 3, and up to 8, preferably up to 6, active hydrogen atoms per molecule. The polyols used for rigid foams generally have a hydroxyl number of about 200 to about 1,200 and more preferably from about 250 to about 800. In certain application, monols may also be used as part of the polyol formulation.

Polyols that are derived from renewable resources such as vegetable oils or animal fats can also be used as additional polyols. Examples of such polyols include castor oil, hydroxymethylated polyesters as described in WO 04/096882 and WO 04/096883, hydroxymethylated polyols as described in U. S. Patent Nos. 4,423,162; 4,496,487 and 4,543,369 and "blown" vegetable oils as described in US Published Patent Applications 2002/0121328, 2002/0119321 and 2002/0090488.

Generally to enhance the reactivity for the polyol system, decrease the demold time, decrease the thermal conductivity and/or to add dimensional stability to the final rigid foam, the polyol component for reaction with an isocyanate, in addition to a polyester polyol of the present invention, will generally contain from 5 to 60 by weight of a polyol obtained from an initiator containing at least one amine group. Such amine initiated polyol generally has a functionality of from 2 to 8, preferably 3 to 8, and an average hydroxyl number from about 200 to about 850, preferably from about 300 to about 770. In a further embodiment, the amine initiated polyol will comprise at least 10, at least 15, at least 20 or at least 25 parts by weight of the polyol formulation. Amine initiated polyols, due to the presence of nitrogen atoms, may have catalytic activity, mainly with respect to foam curing, and may have an influence on the blowing reaction.

In a further embodiment the initiator for the amine-initiated polyols is an aromatic amine, aliphatic amine or cyclo-aliphatic amine. Examples of cyclic aliphatic amines include, methylene bis(cyclohexylamine; 1,2-, 1,3- or 1,4-bis(aminomethyl)cyclohexane; an aminocyclohexanealkylamine; 2- or 4-alkylcyclohexane-1,3-diamine; isophorone diamine or a combination or diastereomeric forms thereof. Examples of linear alkyl amine, include for example, ethylene diethanolamine, N-methyldiethanolamine, ethylene diamine, diethanolamine, diisopropanolamine, monoisopropanolamine, etc. Examples of suitable aromatic amine initiators include, for example, piperazine, aminoethylpiperazine, 1,2-, 1,3-and 1,4-phenylenediamine; 2,3-, 2,4-, 3,4- and 2,6-toluene diamine; 4,4'-, 2,4'- and 2,2'-diaminodiphenylmethane; polyphenyl-polymethylene-polyamine. In one embodiment, a polyol component used with the polyester of the present inventions is a toluene diamine (TDA)-initiated polyol, and even more preferably wherein at least 85 weight percent of the TDA is ortho-TDA. Ethylene diamine- and toluene diamine-initiated polyols are preferred amine initiated polyols for use with the polyesters of the present invention.

In addition to an amine initiated polyols, to increase cross-linking network the polyol blend may contain a higher functional polyol having a functionality of 5 to 8. Initiators for such polyols include, for example, pentaerythritol, sorbitol, sucrose, glucose, fructose or other sugars, and the like. As with the amine initiated polyols, such higher functional polyols will have an average hydroxyl number from about 200 to about 850, preferably from about 300 to about 770. Other initiators may be added to the higher functional polyols, such a glycerin to give co-initiated polyols functionality of from 4.5 to 7 hydroxyl groups per molecule and a hydroxyl equivalent weight of 100 to 175,. When used, such polyols will generally comprise from 5 to 60 wt% of the polyol formulation for making a rigid foam, depending on the particular application.

The polyol mixture may contain up to 20% by weight of still another polyol, which is not the polyester, an amine-initiated polyol or a higher functional polyol and which has a hydroxyl functionality of 2.0 to 3.0 and a hydroxyl equivalent weight of from 90 to 600. For construction applications, the polyol blend may also include a polyol which is the alkoxylation product of a phenol-formaldehyde resin. Such polyols are known in the art as Novolac polyols. When used in a formulation, such Novolac polyols can be present in an amount of up 40 wt percent.

In one embodiment, the invention provides a polyol blend comprising from 10 to 90 weight percent of an aromatic polyester polyol as described above and the remainder is at least one polyol or a combination of polyols having a functionality of 2 to 8 and molecular weight of 100 to 10,000.

Specific examples of polyol mixtures suitable for producing a rigid foam for appliance insulation include a mixture of from 10 to 50 % by weight of the polyester of the present invention; , from 10 to 60 % of at least one amine initiated polyol having a functionality of 3 to 8, and an average hydroxyl number from about 200 to about 850; from 10 to 45 % by weight of sorbitol or sucrose/glycerin initiated polyether polyol wherein the polyol or polyol blend has a functionality of 5 to 8 and a hydroxyl equivalent weight of 200 to 850; and up to 20 % by weight of another polyols having a hydroxyl functionality of 2.0 to 3.0 and a hydroxyl equivalent weight of from 30 to 500.

Polyol mixtures as described can be prepared by making the constituent polyols individually, and then blending them together. Alternatively, polyol mixtures, not including the polyester, can be prepared by forming a mixture of the respective initiator compounds,, and then alkoxylating the initiator mixture to form the polyol mixture directly. Combinations of these approaches can also be used.

For rigid foam applications, the polyols used with the polyester polyols will generally be based on polyoxypropylene, that is, comprise 70 wt% or greater of polyoxypropylene units.

Suitable polyisocyanates for producing polyurethane products include aromatic, cycloaliphatic and aliphatic isocyanates. Such isocyanates are well known in the art. Examples of suitable aromatic isocyanates include the 4,4'-, 2,4' and 2,2'-isomers of diphenylmethane diisocyante (MDI), blends thereof and polymeric and monomeric MDI blends, toluene-2,4- and 2,6-diisocyante (TDI) m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. In one embodiment, TDI/MDI blends are used.

Examples of aliphatic polyisocyanates include ethylene diisocyanate, 1,6-hexamethylene diisocyanate, 1,3- and/or 1,4-bis(isocyanatomethyl)cyclohexane (including cis- or trans-isomers of either), isophorone diisocyanate (IPDI), tetramethylene-1,4-diisocyanate, methylene bis(cyclohexaneisocyanate) (H₁₂MDI), cyclohexane 1,4-diisocyanate, 4,4'-dicyclohexylmethane diisocyanate, saturated analogues of the above mentioned aromatic isocyanates and mixtures thereof.

Derivatives of any of the foregoing polyisocyanate groups that contain biuret, urea, carbodiimide, allophonate and/or isocyanurate groups can also be used. These derivatives often have increased isocyanate functionalities and are desirably used when a more highly crosslinked product is desired.

For production of rigid polyurethane or polyisocyanruate materials, the polyisocyanate is generally a diphenylmethane-4,4'-diisocyanate, diphenylmethane-2,4'-diisocyanate, polymers or derivatives thereof or a mixture thereof. In one preferred embodiment, the isocyanate-terminated prepolymers are prepared with 4,4'-MDI, or other MDI blends containing a substantial portion or the 4.4'-isomer or MDI modified as described above. Preferably the MDI contains 45 to 95 percent by weight of the 4,4'-isomer.

The isocyanate component may be in the form of isocyanate terminated prepolymers formed by the reaction of an excess of an isocyanate with a polyol or polyester, including polyester of the present invention.

The polyesters of the present invention may be used for the production of hydroxyl terminated prepolymers formed by the reaction of an excess of the polyester with an isocyanate.

The polyisocyanate is used in an amount sufficient to provide an isocyanate index of from 80 to 600. Isocyanate index is calculated as the number of reactive isocyanate groups provided by the polyisocyanate component divided by the number of isocyanate-reactive groups in the polyurethane-forming composition (including those contained by isocyanate-reactive blowing agents such as water) and multiplying by 100. Water is considered to have two isocyanate-reactive groups per molecule for purposes of calculating isocyanate index. A preferred isocyanate index is from 90 to 400. For rigid foam applications, the isocyanate index is generally from is from 100 to 150. For polyurethane-polyisocyanurate products, the isocyanate index will generally be greater than 150 up to 800.

It is also possible to use one or more chain extenders in the formulation for production of polyurethane products. The presence of a chain extending agent provides for desirable physical properties, of the resulting polymer. The chain extenders may be blended with the polyol component or may be present as a separate stream during the formation of the polyurethane polymer. A chain extender is a material having two isocyanate-reactive groups per molecule and an equivalent weight per isocyanate-reactive group of less than 400, preferably less than 300 and especially from 31-125 daltons. Crosslinkers may also be included in formulations for the production of polyurethane polymers of the present invention. "Crosslinkers" are materials having three or more isocyanate-reactive groups per molecule and an equivalent weight per isocyanate-reactive group of less than 400. Crosslinkers preferably contain from 3-8, especially from 3-4 hydroxyl, primary amine or secondary amine groups per molecule and have an equivalent weight of from 30 to about 200, especially from 50-125.

The polyester polyols formed by the method of the present invention may be utilized with a wide variety of blowing agents. The blowing agent used in the polyurethane-forming composition includes at least one physical blowing agent which is a hydrocarbon, hydrofluorocarbon, hydrochlorofluorocarbon, fluorocarbon, dialkyl ether or a fluorine-substituted dialkyl ether, or a mixture of two or more thereof. Blowing agents of these types include propane, isopentane, n-pentane, n-butane, isobutane, isobutene, cyclopentane, dimethyl ether, 1,1-dichloro-1-fluoroethane (HCFC-141b), chlorodifluoromethane (HCFC-22), 1-chloro-1,1-difluoroethane (HCFC-142b), 1,1,1,2-tetrafluoroethane (HFC-134a), 1,1,1,3,3-pentafluorobutane (HFC-365mfc), 1,1-difluoroethane (HFC-152a), 1,1,1,2,3,3,3-heptafluoropropane (HFC-227ea) and 1,1,1,3,3-pentafluoropropane (HFC-245fa). The hydrocarbon and hydrofluorocarbon blowing agents are preferred. The polyester of the present invention is display good compatibility with hydrocarbon blowing agents, such as various isomers of pentane and butane. In a further embodiment the hydrocarbon blowing agent utilized is cyclopentane. It is generally preferred to further include water in the formulation, in addition to the physical blowing agent.

Blowing agent(s) are preferably used in an amount sufficient such that the formulation cures to form a foam having a molded density of from 16 to 160 kg/m³, preferably from 16 to 64 kg/m³ and especially from 20 to 48 kg/m³. To achieve these densities, the hydrocarbon or hydrofluorocarbon blowing agent conveniently is used in an amount ranging from about 10 to about 40, preferably from about 12 to about 35, parts by weight per 100 parts by weight polyol(s). Water reacts with isocyanate groups to produce carbon dioxide, which acts as an expanding gas. Water is suitably used in an amount within the range of 0.5 to 3.5, preferably from 1.0 to 3.0 parts by weight per 100 parts by weight of polyol(s).

The polyurethane-forming composition typically will include at least one catalyst for the reaction of the polyol(s) and/or water with the polyisocyanate. Suitable urethane-forming catalysts include those described by U.S. Pat. No. 4,390,645 and in WO 02/079340.

Representative catalysts include tertiary amine and phosphine compounds, chelates of various metals, acidic metal salts of strong acids; strong bases, alcoholates and phenolates of various metals, salts of organic acids with a variety of metals, organometallic derivatives of tetravalent tin, trivalent and pentavalent As, Sb and Bi and metal carbonyls of iron and cobalt.

Tertiary amine catalysts are generally preferred. Among the tertiary amine catalysts are dimethylbenzylamine (such as Desmorapid® DB from Rhine Chemie), 1,8-diaza (5,4,0)undecane-7 (such as Polycat® SA-1 from Air Products), pentamethyldiethylenetriamine (such as Polycat® 5 from Air Products), dimethylcyclohexylamine (such as Polycat® 8 from Air Products), triethylene diamine (such as Dabco® 33LV from Air Products), dimethyl ethyl amine, n-ethyl morpholine, N-alkyl dimethylamine compounds such as N-ethyl N,N-dimethyl amine and N-cetyl N,N-dimethylamine, N-alkyl morpholine compounds such as N-ethyl morpholine and N-coco morpholine, and the like. Other tertiary amine catalysts that are useful include those sold by Air Products under the trade names Dabco® NE1060, Dabco® NE1070, Dabco® NE500, Dabco® TMR-2, Dabco® TMR 30, Polycat® 1058, Polycat® 11, Polycat 15, Polycat® 33 Polycat® 41 and Dabco® MD45, and those sold by Huntsman under the trade names ZR 50 and ZR 70. In addition, certain amine-initiated polyols can be used herein as catalyst materials, including those described in WO 01/58976 A. Mixtures of two or more of the foregoing can be used.

The catalyst is used in catalytically sufficient amounts. For the preferred tertiary amine catalysts, a suitable amount of the catalysts is from about 1 to about 4 parts, especially from about 1.5 to about 3 parts, of tertiary amine catalyst(s) per 100 parts by weight of the polyol(s).

The polyurethane-forming composition also preferably contains at least one surfactant, which helps to stabilize the cells of the composition as gas evolves to form bubbles and expand the foam. Examples of suitable surfactants include alkali metal and amine salts of fatty acids such as sodium oleate, sodium stearate sodium ricinolates, diethanolamine oleate, diethanolamine stearate, diethanolamine ricinoleate, and the like: alkali metal and amine salts of sulfonic acids such as dodecylbenzenesulfonic acid and dinaphthylmethanedisulfonic acid; ricinoleic acid; siloxane-oxalkylene polymers or copolymers and other organopolysiloxanes; oxyethylated alkylphenols (such as Tergitol NP9 and Triton X100, from The Dow Chemical Company); oxyethylated fatty alcohols such as Tergitol 15-S-9, from The Dow Chemical Company; paraffin oils; castor oil; ricinoleic acid esters; turkey red oil; peanut oil; paraffins; fatty alcohols; dimethyl polysiloxanes and oligomeric acrylates with polyoxyalkylene and fluoroalkane side groups. These surfactants are generally used in amount of 0.01 to 6 parts by weight based on 100 parts by weight of the polyol.

Organosilicone surfactants are generally preferred types. A wide variety of these organosilicone surfactants are commercially available, including those sold by Goldschmidt under the Tegostab® name (such as Tegostab B-8462, B8427, B8433 and B-8404 surfactants), those sold by OSi Specialties under the Niax® name (such as Niax® L6900 and L6988 surfactants) as well as various surfactant products commercially available from Air Products and Chemicals, such as DC-193, DC-198, DC-5000, DC-5043 and DC-5098 surfactants.

In addition to the foregoing ingredients, the polyurethane-forming composition may include various auxiliary components such as fillers, colorants, odor masks, flame retardants, biocides, antioxidants, UV stabilizers, antistatic agents, viscosity modifiers and the like.

Examples of suitable flame retardants include phosphorus compounds, halogen-containing compounds and melamine.

Examples of fillers and pigments include calcium carbonate, titanium dioxide, iron oxide, chromium oxide, azo/diazo dyes, phthalocyanines, dioxazines, recycled rigid polyurethane foam and carbon black.

Examples of UV stabilizers include hydroxybenzotriazoles, zinc dibutyl thiocarbamate, 2,6-ditertiarybutyl catechol, hydroxybenzophenones, hindered amines and phosphites. Except for fillers, the foregoing additives are generally used in small amounts. Each may constitute from 0.01 percent to 3 percent of the total weight of the polyurethane formulation. Fillers may be used in quantities as high as 50% of the total weight of the polyurethane formulation.

The polyurethane-forming composition is prepared by bringing the various components together under conditions such that the polyol(s) and isocyanate(s) react, the blowing agent generates a gas, and the composition expands and cures. All components (or any subcombination thereof) except the polyisocyanate can be pre-blended into a formulated polyol composition if desired, which is then mixed with the polyisocyanate when the foam is to be prepared. The components may be preheated if desired, but this is usually not necessary, and the components can be brought together at about room temperature (~22°C) to conduct the reaction. It is usually not necessary to apply heat to the composition to drive the cure, but this may be done if desired, too.

The invention is particularly useful in so-called "pour-in-place" applications, in which the polyurethane-forming composition is dispensed into a cavity and foams within the cavity to fill it and provide structural and/or thermal insulative attributes to an assembly. The nomenclature "pour-in-place" refers to the fact that the foam is created at the location where it is needed, rather than being created in one step and later assembled into place in a separate manufacturing step. Pour-in-place processes are commonly used to make appliance products such as refrigerators, freezers, and coolers and similar products which have walls that contain thermal insulation foam. The presence of amine-initiated polyol, in addition to the high functionality polyester polyol in the polyurethane-forming composition tends to provide the formulation with good flow and short demold times, while at the same time producing a low k-factor foam.

The walls of appliances such as refrigerators, freezers and coolers are most conveniently insulated in accordance with the invention by first assembling an outer shell and an interior liner together, such that a cavity is formed between the shell and liner. The cavity defines the space to be insulated as well as the dimensions and shape of the foam that is produced. Typically, the shell and liner are bonded together in some way, such as by welding, melt-bonding or through use of some adhesive (or some combination of these) prior to introduction of the foam formulation. In most cases, the shell and liner may be supported or held in the correct relative positions using a jig or other apparatus. One or more inlets to the cavity are provided, through which the foam formulation can be introduced. Usually, one or more outlets are provided to allow air in the cavity to escape as the cavity is filled with the foam formulation and the foam formulation expands.

The materials of construction of the shell and liner are not particularly critical, provided that they can withstand the conditions of the curing and expansion reactions of the foam formulation. In most cases, the materials of construction will be selected with regard to specific performance attributes that are desired in the final product. Metals such as steel are commonly used as the shell, particularly in larger appliances such as freezers or refrigerators. Plastics such as polycarbonates, polypropylene, polyethylene styreneacrylonitrile resins, acrylonitrile-butadiene-styrene resins or high-impact polystyrene are used more often in smaller appliances (such as coolers) or those in which low weight is important. The liner may be a metal, but is more typically a plastic as just described.

The foam formulation is then introduced into the cavity. The various components of the foam formulation are mixed together and the mixture introduced quickly into the cavity, where the components react and expand. It is common to pre-mix the polyol(s) together with the water and blowing agent (and often catalyst and/or surfactant as well) to produce a formulated polyol. The formulated polyol can be stored until it is time to prepare the foam, at which time it is mixed with the polyisocyanate and introduced into the cavity. It is usually not required to heat the components prior to introducing them into the cavity, nor it is usually required to heat the formulation within the cavity to drive the cure, although either or both of these steps may be taken if desired. The shell and liner may act as a heat sink in some cases, and remove heat from the reacting foam formulation. If necessary, the shell and/or liner can be heated somewhat (such as up to 50°C and more typically 35-40°C) to reduce this heat sink effect, or to drive the cure.

Enough of the foam formulation is introduced such that, after it has expanded, the resulting foam fills those portions of the cavity where foam is desired. Most typically, essentially the entire cavity is filled with foam. It is generally preferred to "overpack" the cavity slightly, by introducing more of the foam formulation than is minimally needed to fill the cavity, thereby increasing the foam density slightly. The overpacking provides benefits such as better dimensional stability of the foam, especially in the period following demold. Generally, the cavity is overpacked by from 4 to 20% by weight. When vacuum assisted injection is used, the overpak may be up to 40% by weight. The final foam density for most appliance applications is preferably in the range of from 28 to 40 kg/m³.

After the foam formulation has expanded and cured enough to be dimensionally stable, the resulting assembly can be "demolded" by removing it from the jig or other support that is used to maintain the shell and liner in their correct relative positions. Short demold times are important to the appliance industry, as shorter demold times allow more parts to be made per unit time on a given piece of manufacturing equipment The assembly line can be equipped with either movable or stationary fixtures The polyester polyols formed by the method of the present invention are particularly suitable where a demold time of less than 10 minutes is desired. The polyester polyols may also be used for giving a demold time below 7 minutes, and even below 6 minutes.

If desired, the process of producing applicances can be practiced in conjunction with vacuum assisted injection (VAI) methods described, for example, in WO publications 2007/058793 and WO 2010/044361, in which the reaction mixture is injected into a closed mold cavity which is at a reduced pressure. In the VAI process, the mold pressure is reduced to 300 to 950 mbar (30-95 kPa), preferably from 400 to 900 mbar (40-90 kPa) and even more preferably from 500 to 850 mbar (50-85 kPa), before or immediately after the foam forming composition is charged to the mold. Furthermore, the packing factor (ratio of the density of the molded foam divided by its free rise density) should be from 1.03 to 1.9.

The following examples are provided to illustrate the invention, but are not intended to limit the scope thereof. All parts and percentages are by weight unless otherwise indicated. A description of the raw materials used in the examples is as follows.
VORANOL CP 450 is a glycerin initiated polyoxypropylene polyol having a molecular weight of about 450.
VORANOL CP 260 is a glycerin initiated polyoxypropylene polyol having a molecular weight of about 260.
VORANOL™ RN482 polyol is a sorbitol initiated polyoxypropylene polyol having a molecular weight of about 700. VORANOL is a Trademark of The Dow Chemical Company
Polyol 1 is a glycerin initiated polyoxypropylene polyol having a molecular weight of about 1050
Polyol 2 is an orthotoluenediamine initiated polyoxypropylene polyol having a molecular weight of about 510.
VORANOL 640 Polyol is an ethylenediamine initiated polyoxypropylene polyol having a molecular weight of about 350
DABCO TMR-30 is a delayed action gelation catalyst available from Air Products. (DABCO is a trademark of Air Products Corporation).
NIAX L-6900 is a silcone surfactant available from Momentive. (NIAX is a trademark of Momentive Performance Materials Inc.)
POLYCAT 5 is a blowing catalyst available from Air Products (POLYCAT is a trademark of Air Products Corporation).
Stepanpol PS 3152 is a dietheylene glycol-phthalic anhydride based polyester polyol having a hydroxyl value of 290 to 325 and functionality of 2, obtained from Stepan Company.
Stepanpol PS 2352 is a phthalic anhydride based polyester polyol having a hydroxyl value of 235 obtained from Stepan Company.
Polyester Reference is a terephthalic acid based polyester polyol having a hydroxyl value of 315 and a viscosity of 600 cP at 25C.
Polyester # 1 is a terephthalic acid based polyester polyol having a hydroxyl value of 235, a viscosity of 6,000 cP at 25 degrees Celsius and a functionality of 3.0
Polyester # 2 is a terephthalic acid based polyester polyol having a hydroxyl value of 235, a viscosity of 14,000 cP at 25 degrees Celsius and a functionality of 2.9
Polyester # 3 is a terephthalic acid based polyester polyol having a hydroxyl value of 315, a viscosity of 14,000 cP at 25 degrees Celsius and a functionality of 2.9
PAPI 27 isocyanate is a polymethyl polyphenyl isocyanate that contains MDI, having an average functionality of 2.7 and a molecular weight of 340.

Production of Polyester Reference. 2000 grams of raw materials, Diethylene glycol (25.8wt%), polyethylene glycol 200 (42.2wt%) and terephthalic acid (32wt%), are charged to a 3000 ml glass flask equipped with a nitrogen inlet tube, pneumatic stirrer, thermometer and condenser. Heat is applied and the flask contents raised to 230-235°C. At a temperature of 180°C a titanium acetylacetonate catalyst (Tyzor AA-105 from Du Pont) is charged (50 ppm) and a little flow of nitrogen is applied. The mixture is held at 230-235°C for 8 hours. The polyester polyol at this point has an acid No. below 2 mgKOH/g. The content of the flask is cooled to room temperature under atmospheric conditions. Production of Polyester #1. 2000 grams of raw materials, diethylene glycol (15.3wt%), VORANOL CP450 polyol (59.7wt%) and terephthalic acid (25wt%) are charged to the apparatus described for Polyester Reference. The process for production of the polyester is as given for the production of Polyester Reference.

Production of Polyester #2. 2000 grams of raw materials, Diethylene glycol (12wt%), VORANOL CP260 polyol (29.8wt%), polyethylene glycol PEG200 (23.2wt%) and terephthalic acid (35wt%) are charged to the apparatus described for Polyester Reference. The process for production of the polyester is as given for the production of Polyester Reference.

Production of Polyester #3. 2000 grams of raw materials, Diethylene glycol (24.8wt%), VORANOL CP450 polyol (40.2wt%) and terephthalic acid (35wt%) are charged to the apparatus described for Polyester Reference. The process for production of the polyester is as given for the production of Polyester Reference.

### Examples 1 to 3

The polyester polyols described above were used to prepare polyurethane foam for refrigeration cabinets. The polyol formulation is shown in the Table 1.

**Table 1**

| **Polyol Side Component** | **Parts** |
|---|---|
| VORANOL RN482 | 40 |
| Polyol 1 | 15 |
| Polyol 2 | 13 |
| VORANOL 640 | 7 |
| Polyester | 25 |
| Polycat 5 | 1.5 |
| DABCO TMR-30 | 2.25 |
| NIAX L-9000 | 2.0 |
| Water | 2.1 |
| Cyclo Pentane | 16 |
| *Total Polyol* | 123.85 |

| **Isocyanate Side Component** | |
|---|---|
| PAPI 27 | 141.5 |

The properties of the reference formulations and those with polyesters 1 to 3 are given in Table , along with the stability of the polyol formulation.

**Table 2**

| **Example** | **C1*** | **C2** | **C3** | **1** | **2** | **3** |
|---|---|---|---|---|---|---|
| **Polyester specifications** | **PS-3152** | **PS-2352** | **Polyester Reference** | **Polyester #1** | **Polyester #2** | **Polyester #3** |
| OH number (mgKOH/g) | 315 | 235 | 315 | 235 | 235 | 315 |
| Viscosity at 25°c mPa*s | 2,700 | 3,000 | 600 | 6,500 | 14,000 | 14,000 |
| Physical state at 25°c after 1 week | Liquid | Liquid | Liquid | Liquid | Liquid | Liquid |
| Stability of Polyol Formulation | Turbid | Clear | Phase separated | Clear | Clear | Clear |

| | | | | | | |
|---|---|---|---|---|---|---|
| *C designates a comparative, not part of the present invention. | | | | | | |

Polyester Polyols #1, #2 and #3 are liquid at room temperature, have manageable viscosity and long term shelf life (stability). When used in polyol blend, they also led to stable polyol formulations as shown in the Table 2.

Foams are produced using a high pressure machine Hi-Tech Eco-RIM. Both the polyol formulation and PAPI27 are preheated to 70+/- 2 F prior to mixing with high pressure impingement mixer. The reacting mixture are dispensed into an aluminum mold (Brett mold, 200 x 20 x 5 cm) preheated to 125F. The demold expansion are measured at 10% overpack by opening the mold 3 minutes after injection. The maximum expansion of the mold lid is then recorded. Samples for k-factor and compressive strength are post-cured overnight before cutting. Once cut, the foam samples were tested within 4 hours. Compressive strength was measured according to ASTM D1621 and k-factor measured according to ASTM C518. The results obtained from machine run are shown in Table 3:

**Table 3**

| Example | Demold expansion (in) at 10% op | k-factor (10% op) | Compressive strength (psi) at 10%op | Compressive strength (psi) at 13% op |
|---|---|---|---|---|
| C1 | 0.111 | 0.1411 | 16.46 | 17.20 |
| C2 | 0.107 | 0.1403 | 15.80 | 16.74 |
| C2 | 0.083 | 0.1397 | 13.54 | 15.82 |
| 1 | 0.081 | 0.1401 | 15.1 | 17.4 |
| 2 | 0.094 | 0.1404 | 16.1 | 17.1 |
| 3 | 0.080 | 0.1393 | 16.7 | 19.8 |

As shown in Table 3, all TPA-based polyesters lead to improvements in demold expansion, however, the polyester made without propoxylated glycerin led to lower compressive strength and poor stability on the polyol formulation. The grades with propoxylated glycerin maintained the improvements in demold expansion relative to the phthalic anhydride polyols without sacrifices in compressive strength. These polyesters also led to formulations fully compatible with hydrocarbon blowing agents.

## Claims

1. A method of making a polyester polyol comprising reacting in a one shot synthesis at least:
A) an aromatic component comprising 80 mole percent or greater of terephthalic acid;
B) at least one polyether polyol having a nominal functionality greater than 2 and less than or equal to 4, a molecular weight of 250 to 1000 and has a polyoxypropylene content of at least 70 % by weight of the polyol ; and
C) at least one glycol other than B having a molecular weight from 60 to 250;
wherein A, B, and C are present in the reaction on a percent weight bases of 20 to 60 weight percent A); 15 to 70 weight percent of B); and 10 to 50 weight percent of C), wherein the functionality of the polyol is from 2.4 to 3.0.

2. The method of claim 1 wherein the aromatic content comprises 85 mole percent or greater of terephthalic acid.

3. The method of claim 2 wherein the aromatic content comprises 95 mole percent or greater of terephthalic acid.

4. The method of any one of claims 1 to 3 wherein the functionality of the polyol is from 2.4 to 3.

5. The method of claim 4 wherein the polyether polyol B) has a molecular weight of less than 800.

6. The method of claim 5 wherein the glycol C) has a functionality of 2 to 3.

7. The method of claim 6 wherein a two functional glycol is represented by the formula 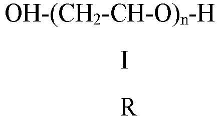 where R is hydrogen or a lower alkyl of 1 to 4 carbon atoms and n is selected to give a molecular weight of 250 or less.

8. The method of claim 7 wherein the glycol C) is a mixture of a two functional glycol and a three functional glycol.

9. The method of claim 8 wherein the three functional glycol is glycerol, trimethylolpropane or a combination thereof.

10. A polyol mixture comprising:
i) from 10 to 90 % of a polyester polyol formed by the method of claim 1; and
ii) from 10 to 90 weight percent of a polyol or polyol blend other than i) having a functionality of 2 to 8 and a molecular weight of 100 to 10,000.

11. A polyol mixture comprising at least:
from 10 to 50 % by weight of the polyester formed by the method of claim 1;
from 10 to 60 % of at least one amine initiated polyol having a functionality of 3 to 8, and an average hydroxyl number from about 200 to about 850;
from 10 to 45 % by weight of sorbitol or sucrose/glycerin initiated polyether polyol wherein the polyol or polyol blend has a functionality of 5 to 8 and a hydroxyl equivalent weight of 200 to 850,
and up to 20 % by weight of another polyol having a hydroxyl functionality of 2.0 to 3.0 and a hydroxyl equivalent weight of from 30 to 500.

12. A process for preparing a rigid polyurethane foam, comprising
a) forming a reactive mixture which contains at least
1) a polyester formed by the method of claim 1 or a mixture thereof with at least one other polyol, provided that such mixture contains at least 10 percent by weight of the polyester
2) an polyisocyanate,
3) at least one hydrocarbon, hydrofluorocarbon, hydrochlorofluorocarbon, fluorocarbon, dialkyl ether or fluorine-substituted dialkyl ether physical blowing agent;
b) subjecting the reactive mixture to conditions such that the reactive mixture expands and cures to form a rigid polyurethane foam.

## Patentansprüche

1. Ein Verfahren zum Herstellen eines Polyesterpolyols, beinhaltend das Reagierenlassen in einer One-Shot-Synthese von mindestens Folgendem:
A) einer aromatischen Komponente, beinhaltend 80 Molprozent oder mehr Terephthalsäure;
B) mindestens einem Polyetherpolyol mit einer nominalen Funktionalität von mehr als 2 und weniger als oder gleich 4, einem Molekulargewicht von 250 bis 1000 und mit einem Polyoxypropylengehalt von mindestens 70 Gew.-% Polyol; und
C) mindestens einem Glycol, das sich von B unterscheidet, mit einem Molekulargewicht von 60 bis 250;
wobei A, B und C in der Reaktion auf einer Prozentgewichtbasis von 20 bis 60 Gewichtsprozent A); 15 bis 70 Gewichtsprozent B); und 10 bis 50 Gewichtsprozent C) vorhanden sind, wobei die Funktionalität des Polyols von 2,4 bis 3,0 beträgt.

2. Verfahren gemäß Anspruch 1, wobei der aromatische Gehalt 85 Molprozent oder mehr Terephthalsäure beinhaltet.

3. Verfahren gemäß Anspruch 2, wobei der aromatische Gehalt 95 Molprozent oder mehr Terephthalsäure beinhaltet.

4. Verfahren gemäß einem der Ansprüche 1 bis 3, wobei die Funktionalität des Polyols von 2,4 bis 3 beträgt.

5. Verfahren gemäß Anspruch 4, wobei das Polyetherpolyol B) ein Molekulargewicht von weniger als 800 aufweist.

6. Verfahren gemäß Anspruch 5, wobei das Glycol C) eine Funktionalität von 2 bis 3 aufweist.

7. Verfahren gemäß Anspruch 6, wobei ein bifunktionelles Glycol durch die folgende Formel dargestellt ist: 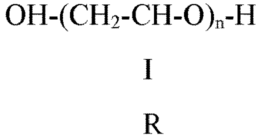 wobei R Wasserstoff oder ein niederes Alkyl mit 1 bis 4 Kohlenstoffatomen ist und n ausgewählt ist, um ein Molekulargewicht von 250 oder weniger zu ergeben.

8. Verfahren gemäß Anspruch 7, wobei das Glycol C) eine Mischung aus einem bifunktionellen Glycol und einem trifunktionellen Glycol ist.

9. Verfahren gemäß Anspruch 8, wobei das trifunktionelle Glycol Glycerol, Trimethylolpropan oder eine Kombination davon ist.

10. Eine Polyolmischung, die Folgendes beinhaltet:
i) zu 10 bis 90 % ein Polyesterpolyol, gebildet nach dem Verfahren gemäß Anspruch 1; und
ii) zu 10 bis 90 Gewichtsprozent ein Polyol oder ein Polyolgemisch, das sich von i) unterscheidet, mit einer Funktionalität von 2 bis 8 und einem Molekulargewicht von 100 bis 10 000.

11. Eine Polyolmischung, die mindestens Folgendes beinhaltet:
zu 10 bis 50 Gew.-% das nach dem Verfahren gemäß Anspruch 1 gebildete Polyester;
zu 10 bis 60 % mindestens ein amininitiiertes Polyol mit einer Funktionalität von 3 bis 8 und einer durchschnittlichen Hydroxylzahl von etwa 200 bis etwa 850;
zu 10 bis 45 Gew.-% sorbitol- oder saccharose-/glycerininitiiertes Polyetherpolyol, wobei das Polyol oder das Polyolgemisch eine Funktionalität von 5 bis 8 und ein Hydroxyläquivalentgewicht von 200 bis 850 aufweist,
und bis zu 20 Gew.-% ein weiteres Polyol mit einer Hydroxylfunktionalität von 2,0 bis 3,0 und einem Hydroxyläquivalentgewicht von 30 bis 500.

12. Ein Prozess zum Zubereiten eines Polyurethanhartschaums, der Folgendes beinhaltet:
a) Bilden einer reaktiven Mischung, die mindestens Folgendes enthält:
1) ein Polyester, gebildet nach dem Verfahren gemäß Anspruch 1, oder eine Mischung davon mit mindestens einem anderen Polyol, mit der Vorgabe, dass eine solche Mischung zu mindestens 10 Gewichtsprozent das Polyester enthält,
2) ein Polyisocyanat,
3) mindestens ein physikalisches Treibmittel aus Kohlenwasserstoff, Fluorkohlenwasserstoff, Fluorchlorkohlenwasserstoff, Fluorkohlenstoff, Dialkylether oder fluorsubstituiertem Dialkylether;
b) Aussetzen der reaktiven Mischung gegenüber derartigen Bedingungen, dass sich die reaktive Mischung ausdehnt und härtet, um einen Polyurethanhartschaum zu bilden.

## Revendications

1. Une méthode pour réaliser un polyol de polyester comprenant le fait de faire réagir dans une synthèse « one-shot » au moins :
A) un composant aromatique qui comprend 80 pour cent en moles ou plus d'acide téréphtalique ;
B) au moins un polyol de polyéther qui a une fonctionnalité nominale supérieure à 2 et inférieure ou égale à 4, une masse moléculaire de 250 à 1 000 et a une teneur en polyoxypropylène d'au moins 70 % en poids du polyol ; et
C) au moins un glycol autre que B qui a une masse moléculaire allant de 60 à 250 ; dans laquelle A, B, et C sont présents dans la réaction sur une base de pourcentage en poids de 20 à 60 pour cent en poids de A) ; 15 à 70 pour cent en poids de B) ; et 10 à 50 pour cent en poids de C), la fonctionnalité du polyol allant de 2,4 à 3,0.

2. La méthode de la revendication 1 dans laquelle la teneur en aromatique comprend 85 pour cent en moles ou plus d'acide téréphtalique.

3. La méthode de la revendication 2 dans laquelle la teneur en aromatique comprend 95 pour cent en moles ou plus d'acide téréphtalique.

4. La méthode de l'une quelconque des revendications 1 à 3 dans laquelle la fonctionnalité du polyol va de 2,4 à 3.

5. La méthode de la revendication 4 dans laquelle le polyol de polyéther B) a une masse moléculaire inférieure à 800.

6. La méthode de la revendication 5 dans laquelle le glycol C) a une fonctionnalité de 2 à 3.

7. La méthode de la revendication 6 dans laquelle un glycol bi-fonctionnel est représenté par la formule 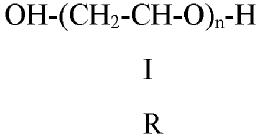 où R est l'hydrogène ou un alkyle inférieur de 1 à 4 atomes de carbone et n est sélectionné afin de donner une masse moléculaire de 250 ou moins.

8. La méthode de la revendication 7 dans laquelle le glycol C) est un mélange d'un glycol bi-fonctionnel et d'un glycol tri-fonctionnel.

9. La méthode de la revendication 8 dans laquelle le glycol tri-fonctionnel est le glycérol, le triméthylolpropane ou une combinaison de ceux-ci.

10. Un mélange de polyols comprenant :
i) de 10 à 90 % d'un polyol de polyester formé grâce à la méthode de la revendication 1 ; et
ii) de 10 à 90 pour cent en poids d'un polyol ou mélange homogène de polyols autre que i) qui a une fonctionnalité de 2 à 8 et une masse moléculaire de 100 à 10 000.

11. Un mélange de polyols comprenant au moins :
de 10 à 50 % en poids du polyester formé grâce à la méthode de la revendication 1 ;
de 10 à 60 % d'au moins un polyol initié par une amine qui a une fonctionnalité de 3 à 8, et un nombre d'hydroxyle moyen allant d'environ 200 à environ 850 ;
de 10 à 45 % en poids de polyol de polyéther initié par le sorbitol ou la saccharose/glycérine, le polyol ou mélange homogène de polyols ayant une fonctionnalité de 5 à 8 et un poids équivalent d'hydroxyle de 200 à 850,
et jusqu'à 20 % en poids d'un autre polyol qui a une fonctionnalité hydroxyle de 2,0 à 3,0 et un poids équivalent d'hydroxyle allant de 30 à 500.

12. Un procédé pour préparer une mousse de polyuréthane rigide, comprenant
a) le fait de former un mélange réactif qui contient au moins
1) un polyester formé grâce à la méthode de la revendication 1 ou un mélange de celui-ci avec au moins un autre polyol, à condition qu'un tel mélange contienne au moins 10 pour cent en poids du polyester
2) un polyisocyanate,
3) au moins un agent gonflant physique hydrocarbure, hydrofluorocarbone, hydrochlorofluorocarbone, fluorocarbone, éther de dialkyle ou éther de dialkyle substitué par du fluor ;
b) le fait de soumettre le mélange réactif à des conditions telles que le mélange réactif s'expanse et durcit afin de former une mousse de polyuréthane rigide.
